# EUROPEAN PATENT APPLICATION

(11) **EP 2 690 577 A1**
(43) Date of publication of application: **29.01.2014**
(21) Application number: 13173782.7
(22) Date of filing: 26.06.2013
(51) Int. Cl.: G06F 21/55, G06F 21/70

(54) **Electronic storage device and data protection method thereof**

(30) Priority: 23.07.2012 US 201261674785 P; 18.12.2012 CN 201210548945
(71) Applicant: Getac Technology Corporation, Taipei City 11568 (TW)
(72) Inventor: Chuang, Che-Wei, 11568 Taipei City (TW); Lin, Hsin-Chih, 11568 Taipei City (TW)
(74) Representative: Viering, Jentschura & Partner

(57) **Abstract**

An electronic storage device and a data protection method are provided. The electronic storage device is electrically connected to a host, and stores data of the host. The data protection method includes the following steps: providing a backup battery where the backup battery is configured inside the electronic storage device to provide electric power for an operation of the electronic storage device when the host does not provide electricity to the electronic storage device; setting a login failure threshold; transmitting a login event to the electronic storage device; and the electronic storage device determines whether to protect stored data in the electronic storage device according to the login failure threshold and the login event, wherein if a determination result is affirmative, the electronic storage device protects the stored data.

## Description

### BACKGROUND

### Technical Field

The present invention relates to an electronic data storage technique. Particularly, the present invention relates to an electronic storage device and a data protection method thereof.

### Related Art

With the rapid development of electronic data storage technique, storage devices are widely used, and the data stored in the storage device may be important and classified, for example the classified data of military units or government units. The storage device should be designed to prevent unauthorized person from illegally invading, spoiling or stealing data. There are several encryption specifications or different levels of encryption specifications which can achieve the efficacy. But in practice, it is still insufficient to protect electronic data only by these specifications. In order to strengthen data security, the other protection mechanism has to be configured with the storage device to prevent data from being stolen.

### SUMMARY

Accordingly, the present invention is directed to an electronic storage device and a data protection method thereof, by which the problem mentioned in the related art is resolved.

The present invention provides a data protection method, which is adapted to an electronic storage device. The electronic storage device is electrically connected to a host, and stores data of the host. The data protection method includes the following steps. A backup battery is provided, where the backup battery is configured inside the electronic storage device to provide electric power for an operation of the electronic storage device when the host does not provide electricity to the electronic storage device. A time setting value is set. A login event is transmitted to the electronic storage device. The electronic storage device determines whether to protect stored data in the electronic storage device according to the time setting value and the login event. If a determination result is affirmative, the electronic storage device protects the stored data.

The present invention provides a data protection method, which is adapted to an electronic storage device. The electronic storage device is electrically connected to a host, and stores data of the host. The data protection method includes the following steps. A backup battery is provided, where the backup battery is configured inside the electronic storage device to provide electric power for an operation of the electronic storage device when the host does not provide electricity to the electronic storage device. A login failure threshold is set. A login event is transmitted to the electronic storage device. The electronic storage device determines whether to protect stored data in the electronic storage device according to the login failure threshold and the login event. If a determination result is affirmative, the electronic storage device protects the stored data.

The present invention provides an electronic storage device, which is electrically connected to a host to store data of the host. The electronic storage device includes a controller, a storage unit and a backup battery. The storage unit is coupled to the controller. The backup battery is coupled to the controller. When the host does not provide electricity to the electronic storage device, the backup battery provides electric power for an operation of the electronic storage device. The controller determines whether to protect data in the storage unit according to a time setting value and a login event. If a determination result is affirmative, the controller protects the data in the storage unit.

The present invention provides an electronic storage device, which is electrically connected to a host to store data of the host. The electronic storage device includes a controller, a storage unit and a backup battery. The storage unit is coupled to the controller. The backup battery is coupled to the controller. When the host does not provide electricity to the electronic storage device, the backup battery provides electric power for an operation of the electronic storage device. The controller determines whether to protect data in the storage unit according to a login failure threshold and a login event. If a determination result is affirmative, the controller protects the data in the storage unit.

According to the above descriptions, the electronic storage device has a backup battery. When the host does not provide electricity to the electronic storage device, the backup battery provides electric power for the operation of the electronic storage device, and the electric power of the backup battery can be used to preserve the login failure threshold and the login information. A protection mechanism of the electronic storage device can determine according to the time setting value and the login event, or according to whether the login event reaches the login failure threshold, so as to protect the stored data of the electronic storage device to prevent the other from stealing the data.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the present invention, and are incorporated in and constitute a part of this specification. The drawings illustrate embodiments of the present invention and, together with the description, serve to explain the principles of the present invention.

FIG. 1 is a schematic diagram of an electronic storage device according to an embodiment of the present invention.

FIG. 2 is a schematic diagram of the electronic storage device according to another embodiment of the present invention.

FIG. 3 is a flowchart illustrating a data protection method of an electronic storage device according to an embodiment of the present invention.

FIG. 4 a flowchart illustrating a data protection method of an electronic storage device according to another embodiment of the present invention.

FIG. 5 is a flowchart illustrating a data protection method of an electronic storage device according to still another embodiment of the present invention.

FIG. 6 is a flowchart illustrating a data protection method related to a time setting value according to an embodiment of the present invention.

FIG. 7 is a flowchart illustrating a data protection method related to a login failure threshold according to an embodiment of the present invention.

### DETAILED DESCRIPTION OF DISCLOSED EMBODIMENTS

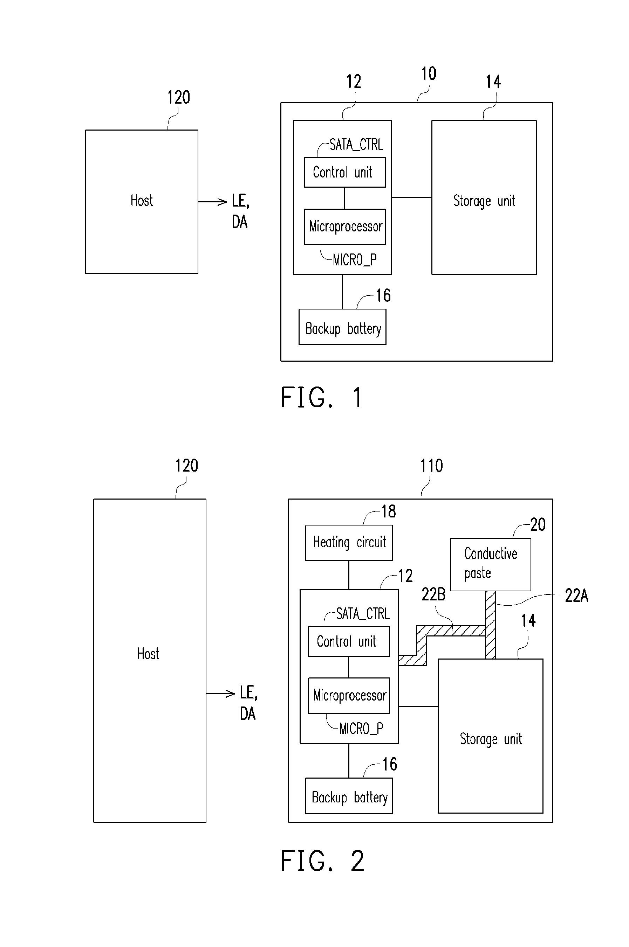

FIG. 1 is a schematic diagram of an electronic storage device 10 according to an embodiment of the present invention. Referring to FIG. 1, the electronic storage device 10 is electrically connected to the host 120, and the electronic storage device 10 stores data DA transmitted by the host 120. The electronic storage device 10 includes controller 12, a storage unit 14 (for example, a flash memory) and a backup battery 16. The controller 12 includes a control unit SATA_CTRL and a microprocessor MICRO_P. The storage unit 14 and the backup battery 16 are coupled to the controller 12. The electronic storage device 10 can be implemented as a solid state drive (SSD). Moreover, the storage unit 14 can be further used to store and operating system, for example, the Microsoft Windows or the Macintosh operating system.

When the electronic storage device 10 is electrically connected to the host 120, a user can log in through the host 120 to execute the operating system. The storage unit 14 can receive a login event LE through the control unit SATA_CTRL and record it, when the login event LE is generated in the login procedure of the host 120. The ways of identification of the login through the host 120 includes face recognition, fingerprint recognition, password identification or smart card identification, though the present invention is not limited thereto. The microprocessor MICRO_P learns whether a new event occurs according to the login event LE, and calculates the number of the login event LE, or records a generation time point of the login event LE. The login event LE may also include a login failure event and/or a login success event. Moreover, the controller 12 determines whether to protect data in the storage unit 14 according to a time setting value and the login event LE, and if a determination result is affirmative, the controller 12 protects the data in the storage unit 14. The time setting value can be a specific date and time or a time limit. The time setting value is not limited to be set by the host 120 and transmitted to the electronic storage device 10, it can also be a predetermined value in the microprocessor MICRO_P. In a varied embodiment, the login event LE is stored in other storage device in the host 120, though the microprocessor MICRO_P still learns whether the new event occurs according to the login event LE.

When the host 120 is electrically connected to the electronic storage device 10, the host 120 supplies electric power to the electronic storage device 10. The backup battery 16 is configured in the electronic storage device 10, which is capable of being repeatedly charged and discharged. When the host 120 does not supply the electric power to the electronic storage device 10, the backup battery 16 can provide the electric power for the operation of the electronic storage device 10. For example, when the electronic storage device 10 is not electrically connected to the host 120, the electronic storage device 10 stores the time setting value and the login information by using the electricity of the backup battery 16.

The electronic storage device 10 has a protection mechanism. A purpose of the "protection" is to prevent the others from stealing the data of the electronic storage device 10. The microprocessor MICRO_P generates the login information according to the login event LE. The microprocessor MICRO_P of the controller 12 determines whether to protect the data in the electronic storage device 10 according to the time setting value and the login information. If a determination result of the microprocessor MICRO_P fulfils a trigger condition of protecting the electronic storage device 10, the controller 12 protects the data in the electronic storage device 10. The trigger condition is described in detail below.

As described above, the time setting value can be the specific date and time or the time limit, and the login event LE may include the login failure event and/or the login success event. The microprocessor MICRO_P generates the login information according to the login event LE. In detail, when the microprocessor MICRO_P determines that the determination result fulfils one of the following trigger conditions according to the login information, the controller 12 protects the stored data in the electronic storage device 10.

Regarding the first trigger condition, the login information includes a cumulative number of failed login attempts, and when the cumulative number of failed login attempts reaches a predetermined value within the time limit, the stored data in the electronic storage device 10 is protected. In detail, the cumulative number of failed login attempts refers to the number of accumulated times of login failure when the host 120 is booted and requires the user to log in, i.e. the host 120 generates a login failure event, and the controller 12 (the microprocessor MICRO_P) calculates the number of the login failure events. In a varied embodiment, the host 120 can count the failed login attempts by itself, and notify the controller 12 of the failed login attempts.

Regarding the second trigger condition, the electronic storage device 10 starts to count a counting time at a last successful login time, and if the host 120 has not yet successfully logged in as the counting time exceeds the time limit, the electronic storage device 10 protects the stored data in the electronic storage device 10. The login information includes the last successful login time, and the last successful login time is the moment when the last login success event generates.

Regarding the third trigger condition, a number of continuous login failed attempts is obtained by counting the number of continuous login failure events, and if the number of continuous login failed attempts reaches a predetermined value within a time limit, the electronic storage device 10 protects the stored data in the electronic storage device 10. In detail, the host 120 generates a login failure event, and the controller 12 counts the number of the login failure events to obtain the number of continuous login failed attempts. The login information includes the number of continuous login failed attempts. In a varied embodiment, the host 120 can count the number of the continuous login failure attempts by itself, and notify the controller 12 of the number of the continuous login failure attempts.

Regarding the fourth trigger condition, if the microprocessor MICRO_P determines that the host 120 has not yet successfully logged in as the time reaches a specific date and time, the electronic storage device 10 protects the stored data in the electronic storage device 10.

In the aforementioned first to the fourth trigger conditions, if the electronic storage device 10 is not electrically connected to the host 120 and the host 120 cannot provide electric power to the electronic storage device 10, the backup battery 16 can provide electric power for the operation of the electronic storage device 10. And therefore the electronic storage device 10 can determine the aforementioned trigger conditions, and preserves the time setting value and the login information by using the electricity of the backup battery 16.

Moreover, the electronic storage device 10 can execute any of the following procedures to protect the stored data. For example, an advanced encryption standard (AES) key destruction procedure, a data destruction procedure, a flash memory destruction procedure or a stored data temporary locking procedure are provided.

For example, when the AES key destruction procedure is executed, an AES key can be tampered or completely destructed. Since the AES key has been tampered or completely destructed, if the electronic storage device 10 is lack of the correct AES key, the host 120 cannot access the stored data in the storage unit 14.

For example, when the data destruction procedure is executed, none particular means is specified. As long as the stored data in the storage unit 14 is destructed or erased, or the storage unit 14 is physically destructed or malfunctioned, it is considered to be within the scope of the present invention.

For example, when the flash memory destruction procedure is executed, the same data can be repeatedly written into the storage unit 14, the stored data of the storage unit 14 is destructed (for example, the data is converted into garbled data), erased, maliciously tampered or destructed, or the storage unit 14 is set to reject any access instruction, though the present invention is not limited to the above several methods.

For example, when the locking procedure of the stored data is temporarily executed, the data in the storage unit 14 cannot be accessed again until an administrator releases a lock state.

Moreover, the controller 12 can also convert the electricity provided by the backup batter 16 or the host 120 into a working voltage, and supplies the working voltage to the storage unit 14 and the controller 12. The manner of converting the electricity into the working voltage may be a voltage boost manner (the working voltage is increased to +12V) or providing a reverse voltage (for example, the working voltage is decreased to -5V), so as to cause a physical destruction of the storage unit 14 and the controller 12. Generally, a DC withstand voltage of the storage unit 14 (for example, a flash memory) and the controller 12 is about 5V. The storage unit 14 and the controller 12 may be an integrated circuit. If a DC voltage of 12V is applied and the DC voltage is far more than a maximum tolerable voltage (for example, (5V×(100%+5%)) of the storage unit 14 and the controller 12, the storage unit 14 and the controller 12 can be physically damaged. Similarly, if the DC voltage of -5V is applied and the reverse DC voltage is far less than a minimum tolerable voltage (for example, 0V) of the storage unit 14 and the controller 12, the storage unit 14 and the controller 12 can be physically damaged.

Referring to FIG. 1, in another varied embodiment, the login event LE can be generated in the login procedure of the host 120. The electronic storage device 10 determines whether to protect the stored data in the electronic storage device 10 according to whether the login event LE reaches a login failure threshold. If a determination result thereof is affirmative, the electronic storage device 10 protects the stored data. The login failure threshold can be an upper limit of the number of continuous login failed attempts or the accumulated login failed attempts.

The protection mechanism of the present embodiment is as follows. The electronic storage device 10 generates login information according to the login event LE. The login information may include the number of continuous login failed attempts or the number of accumulated login failed attempts. The microprocessor MICRO_P of the controller 12 determines whether to protect the stored data in the electronic storage device 10 according to whether the login event LE reaches the login failure threshold. If the determination result of the microprocessor MICRO_P represents that the number of continuous login failed attempts or the number of accumulated login failed attempts reaches the login failure threshold, the controller 12 protects the stored data in the electronic storage device 10.

Moreover, when the electronic storage device 10 is not electrically connected to the host 120, the electronic storage device 10 uses the electricity of the backup battery 16 to implement data protection and preserve the login failure threshold and the login information.

According to the above descriptions, in another varied embodiment, the aforementioned two embodiments can be combined. For example, the controller 12 can determine whether to protect the stored data in the electronic storage device 10 according to the time setting value and the login event LE, or according to whether the login event LE reaches the login failure threshold.

FIG. 2 is a schematic diagram of the electronic storage device 110 according to another embodiment of the present invention. Referring to FIG. 2, a structure of the electronic storage device 110 is similar to that of the electronic storage device 10 of FIG. 1, and the same or similar parts thereof are not repeated. The difference between FIG. 1 and FIG. 2 is that the electronic storage device 110 in FIG. 2 further includes a heating circuit 18, a conductive paste 20 and flow channels 22A and 22B, wherein the flow channels 22A and 22B can be omitted according to an actual implementation. The heating circuit 18 is controlled by the controller 12. The flow channels 22A and 22B are located between the conductive paste 20 and pins of an integrated circuit or components in the electronic storage device 110.

According to the aforementioned data destruction procedure or the flash memory destruction procedure, the data protection method can be as follows. The controller 12 controls the heating circuit 18 to heat the conductive paste 20, such that the conductive paste 20 is melted and flows along the flow channels 22A and 22B to short-circuit the pins of the integrated circuit or the components in the electronic storage device 110.

In detail, the flow channels 22A and 22B may have a plurality of pore structures. When the heating circuit 18 heats the conductive paste 20, a working voltage of the heating circuit 18 can be 19V. When the heating circuit 18 heats the conductive paste 20 to a temperature of 80-90°C, the conductive paste 20 melts. The melted conductive paste 20 flows along the port structures to the pins of the controller 12 and/or the pins of the storage unit 14 (for example, the flash memory).

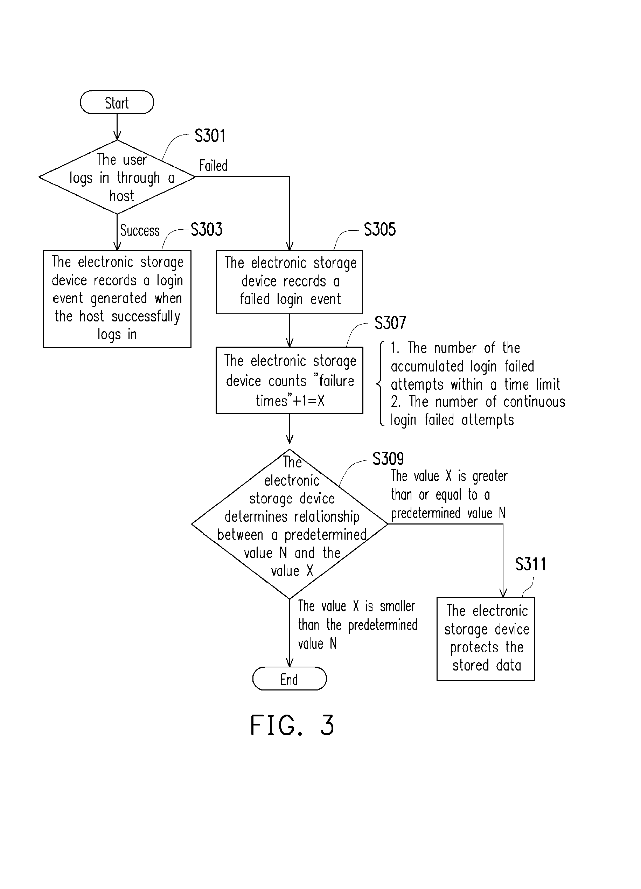

FIG. 3 is a flowchart illustrating a data protection method of an electronic storage device according to an embodiment of the present invention.

Referring to FIG. 3, in step S301, the user logs in through a host. If the login process is successful, a step S303 is executed, otherwise, a step S305 is executed.

In the step S303, the electronic storage device records a login event generated when the host successfully logs in. In another embodiment, the login event can also be stored in other storage devices.

In the step S305, the electronic storage device records a failed login event. Then, in step S307, the electronic storage device (for example, a controller therein) counts "failure times"+1=X, where X can be one of the number of the accumulated login failed attempts within a time limit or the number of continuous login failed attempts. Then, in step S309, the electronic storage device determines the relationship between a predetermined value N and the value X. If the value X is smaller than a predetermined value N, the flow ends. If the value X is greater than or equal to the predetermined value N, a step S311 is executed.

In the step S311, the electronic storage device protects the stored data from being stolen or accessed by others.

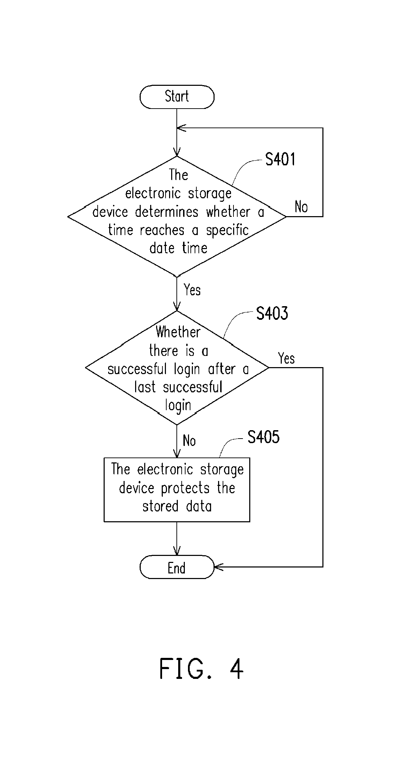

FIG. 4 a flowchart illustrating a data protection method of an electronic storage device according to another embodiment of the present invention.

Referring to FIG. 4, in step S401, the electronic storage device determines whether a time reaches a specific date and time (for example, a certain date or a certain time), and if not, the flow returns to the step S401, and if yes, a step S403 is executed.

In the step S403, the electronic storage device determines whether there is a successful login after a last successful login, and if not, a step S405 is executed. This represents that the host has not yet successfully logged in, so that the electronic storage device protects the stored data. If the determination result of the step S403 is affirmative, the flow ends.

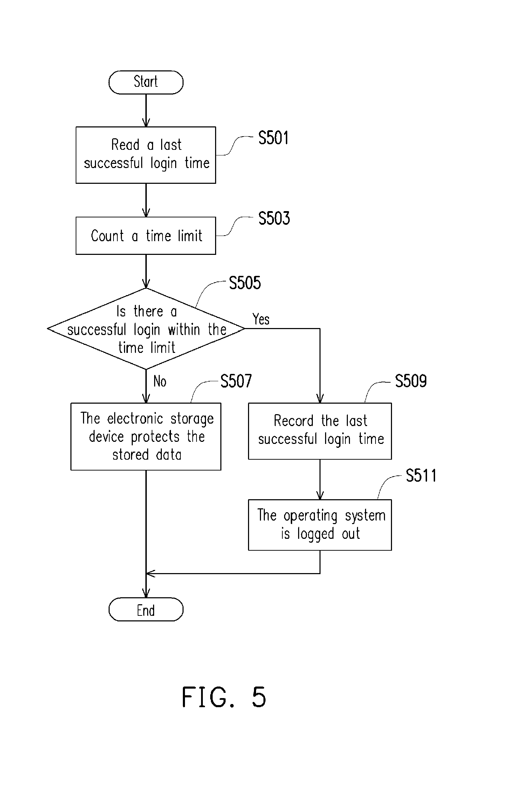

FIG. 5 is a flowchart illustrating a data protection method of an electronic storage device according to another embodiment of the present invention. Referring to FIG. 5, the login information includes a last successful login time.

In step S501, the electronic storage device reads the last successful login time. In step S503, a time limit is counted. Then, in step S505, the electronic storage device determines whether there is a successful login within the time limit, and if not, a step S507 is executed. If the counting time exceeds the time limit, the electronic storage device protects the stored data from being stolen by others (step S507).

If the determination result of the step S505 is affirmative, a step S509 is executed. In the step S509, the electronic storage device records the last successful login time. Then, in step S511, the operating system is logged out.

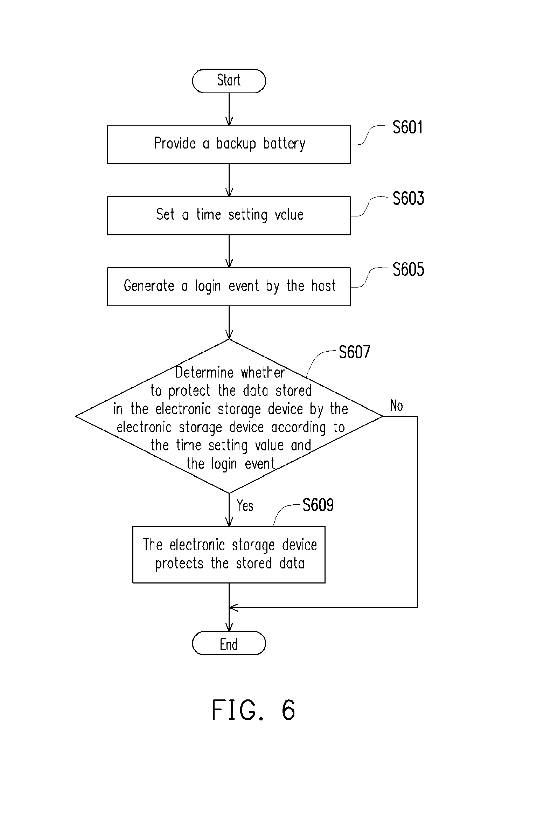

According to the disclosed content of the aforementioned embodiments, a data protection method related to a time setting value is deduced. In detail, FIG. 6 is a flowchart illustrating a data protection method according to an embodiment of the present invention. Referring to FIG. 6, the data protection method of the present embodiment may include following steps.

A backup battery is provided, and the backup battery is configured to be inside the electronic storage device to provide electric power for an operation of the electronic storage device when the host does not provide electricity to the electronic storage device (step S601). Moreover, the backup battery is capable of being repeatedly charged and discharged.

A time setting value is set (step S603), where the time setting value can be a specific date and time or a time limit.

When the host logs in an operating system, the host generates a login event (step S605). For example, the login event is recorded in a flash memory of the electronic storage device, though the login event can also be stored in other storage devices.

The electronic storage device determines whether to protect stored data in the electronic storage device according to the time setting value and the login event (step S607). If a determination result is affirmative, the electronic storage device protects the stored data (step S609). If the determination result is negative, the flow ends.

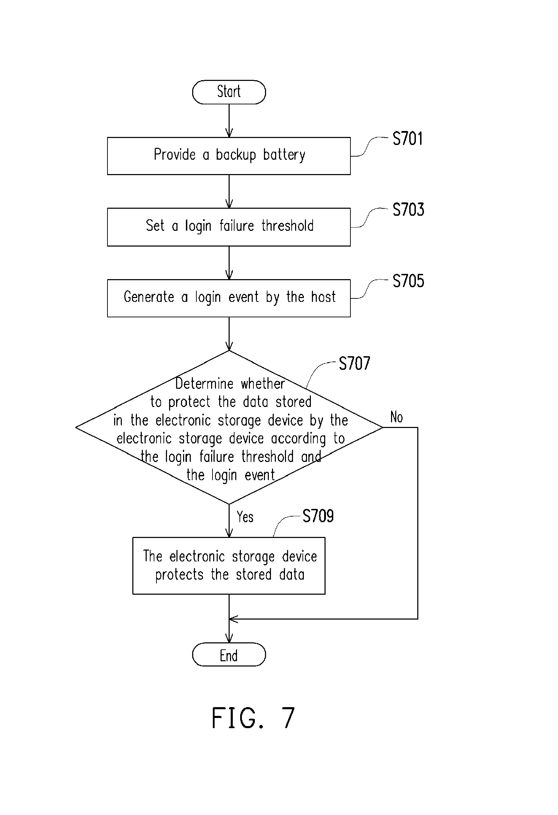

According to the disclosed content of the aforementioned embodiment, a data protection method related to a login failure threshold is deduced. Referring to FIG. 7, the data protection method of the present embodiment may include following steps.

A backup battery is provided, where the backup battery is configured to be inside the electronic storage device to provide electric power for an operation of the electronic storage device when the host does not provide electricity to the electronic storage device (step S701).

A login failure threshold is set (step S703). The login failure threshold can be an upper limit of a number of continuous login failed attempts or a number of accumulated login failed attempts.

When the host logs in an operating system, the host generates a login event (step S705). For example, the login event is recorded in a flash memory of the electronic storage device, or recorded in an additional storage device.

The electronic storage device determines whether to protect stored data in the electronic storage device according to whether the login event reaches the login failure threshold (step S707). If a determination result is affirmative, the electronic storage device protects the stored data (step S709). If the determination result is negative, the flow ends.

In summary, the electronic storage device has a backup battery. When the host does not provide electricity to the electronic storage device, the backup battery provides electric power for the operation of the electronic storage device, and the electric power of the backup battery can be used to preserve the login failure threshold and the login information. The protection mechanism of the electronic storage device can determine according to the time setting value and the login event, or according to whether the login event reaches the login failure threshold, so that the electronic storage device can protect the stored data of the electronic storage device to prevent the other from stealing the data.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A data protection method, adapted to an electronic storage device (10, 110), wherein the electronic storage device (10, 110) is electrically connected to a host (120), and stores data of the host (120), the data protection method comprising:
providing a backup battery (S701), wherein the backup battery is configured to be inside the electronic storage device (10, 110) and to provide electric power for an operation of the electronic storage device (10, 110) when the host (120) does not provide electricity to the electronic storage device (10, 110);
setting a login failure threshold; (S703)
transmitting a login event (LE) (S705) to the electronic storage device (10, 110);
determining whether to protect stored data in the electronic storage device (10, 110) by the electronic storage device (10, 110) according to the login failure threshold and the login event (S707); and
wherein when a determination result is affirmative (S709), the electronic storage device (10, 110) protects the stored data.

2. The data protection method as claimed in claim 1, wherein the electronic storage device (10, 110) generates login information according to the login event, the login event (LE) is a login failure event, and the login information comprises a number of continuous login failed attempts or a number of accumulated login failed attempts (S307);
wherein the number of continuous login failed attempts or the number of accumulated login failed attempts is obtained according to the number of times of the login failure event,
wherein when the number of continuous login failed attempts or the number of accumulated login failed attempts reaches the login failure threshold, the electronic storage device (10, 110) protects the stored data.

3. The data protection method as claimed in claim 1, wherein the step of protecting the stored data by the electronic storage device (10, 110) further comprises executing one of an advanced encryption standard (AES) key destruction procedure, a data destruction procedure, a flash memory destruction procedure or a stored data temporary locking procedure by the electronic storage device (10, 110).

4. The data protection method as claimed in claim 1, wherein the step of protecting the stored data by the electronic storage device (10, 110) further comprises supplying electric power to the electronic storage device (10, 110) in a voltage increasing manner or a reverse voltage manner.

5. The data protection method as claimed in any of claims 1 to 4, wherein the step of protecting the stored data by the electronic storage device (110) further comprises heating a conductive paste (20) to melt the conductive paste (20) to short-circuit pins of an integrated circuit or components in the electronic storage device.

6. An electronic storage device (10, 110), electrically connected to a host (120) to store data of the host (120), the electronic storage device (10, 110) comprising:
a controller (12);
a storage unit (14), coupled to the controller (12); and
a backup battery (16), coupled to the controller (12), wherein when the host (120) does not provide electricity to the electronic storage device (10, 110), the backup battery (16) provides electric power for an operation of the electronic storage device (10, 110),
wherein the controller (12) determines whether to protect data in the storage unit (14) according to a login failure threshold and a login event, and when a determination result is affirmative (S707) (S709), the controller (12) protects the data in the storage unit (14).

7. The electronic storage device (10, 110) as claimed in claim 6, wherein the login event (LE) is a login failure event, the controller (12) generates login information according to the login event, and the login information comprises a number of continuous login failed attempts or a cumulative number of failed login attempts (S307),
wherein the controller (12) counts the login failure events to obtain the number of continuous login failed attempts or the cumulative number of failed login attempts,
wherein when the number of continuous login failed attempts or the cumulative number of failed login attempts reaches the login failure threshold, the electronic storage device (10, 110) protects the stored data.

8. The electronic storage device (10, 110) as claimed in claim 6, wherein when the electronic storage device (10, 110) is not electrically connected to the host (120), the controller (12) preserves the login failure threshold and the login information by using electric power of the backup battery (16).

9. The electronic storage device (10, 110) as claimed in claim 6, wherein when the controller (12) protects the data in the storage unit (14), the controller (12) executes one of an advanced encryption standard (AES) key destruction procedure, a data destruction procedure, a flash memory destruction procedure and a stored data temporary locking procedure.

10. The electronic storage device (10, 110) as claimed in claim 6, wherein when the controller (12) protects the data in the storage unit (14), the controller (12) uses the backup battery to supply electric power to the storage unit (14) in a voltage increasing manner or a reverse voltage manner.

11. The electronic storage device (110) as claimed in any of claims 6 to 10, further comprising:
a heating circuit (18), controlled by the controller (12); and
a conductive paste (20),
wherein when the controller (12) protects the data in the storage unit (14), the controller (12) controls the heating circuit (18) to heat the conductive paste (20) to melt the conductive paste (20) to short-circuit pins of an integrated circuit or components in the electronic storage device (110).
